(19) **Europäisches Patentamt**

**European Patent Office**

**Office européen des brevets**

(11) **EP 0 596 330 B1**

(12) **EUROPÄISCHE PATENTSCHRIFT**

(45) Veröffentlichungstag und Bekanntmachung des Hinweises auf die Patenterteilung:
**28.05.1997 Patentblatt 1997/22**

(51) Int. Cl.$^6$: **B66C 13/06**, B66C 13/46, G01D 5/28

(21) Anmeldenummer: **93116998.1**

(22) Anmeldetag: **20.10.1993**

(54) **Anordnung zum messtechnischen Erfassen von Lastpendelungen bei Kranen**

Arrangement for measuring crane load oscillations

Arrangement pour mesurer les oscillations d'une charge de grue

(84) Benannte Vertragsstaaten:
**BE DE FR GB IT NL SE**

(30) Priorität: **03.11.1992 DE 4237096**
 **03.06.1993 EP 93108948**

(43) Veröffentlichungstag der Anmeldung:
**11.05.1994 Patentblatt 1994/19**

(73) Patentinhaber: **SIEMENS AKTIENGESELLSCHAFT**
**80333 München (DE)**

(72) Erfinder:
• **Wichner, Wolfgang (Dipl.-Ing.)**
 **D-90530 Wendelstein (DE)**
• **Carbon, Ludwig**
 **D-91052 Erlangen (DE)**

(56) Entgegenhaltungen:
**EP-A- 0 342 655**     **EP-A- 0 467 783**
**WO-A-90/09336**     **WO-A-91/14644**
**WO-A-92/19526**     **DE-U- 9 205 427**
**GB-A- 2 099 255**     **US-A- 3 826 380**
**US-A- 4 385 028**

## Beschreibung

Die Erfindung betrifft eine Anordnung zum meßtechnischen Erfassen von Lastpendelungen bei Kranen, wobei im Bereich der Last eine Markierung mit einer reflektierenden Fläche und am Kran eine auf die Markierung gerichtete Beleuchtungseinrichtung angeordnet ist und wobei am Kran ein auf die Markierung gerichteter Detektor mit einem längs zur Pendelrichtung ausgerichteten Bildsensor angeordnet und dem Detektor eine Auswerteeinrichtung nachgeordnet ist, die aus dem Signal des Bildsensors Positionsdaten der Last ermittelt (siehe US-A-3826380)

Krane, wie z. B. Containerkrane, dienen dazu, Lasten an einer vorgegebenen Stelle aufzunehmen, sie über eine bekannte Strecke zu fördern und an an einer festgelegten Stelle abzusetzen. Bei der Automatisierung dieser Vorgänge tritt das Problem auf, daß die Last durch das notwendige Anfahren und Abbremsen zu unerwünschten Pendelbewegungen angestoßen wird, die wegen der geringen Eigendämpfung des Systems nur langsam abklingen und damit das Aufnehmen und positionsgenaue Absenken der Last erheblich erschweren und verzögern. Da die Förderleistung in starkem Maße davon bestimmt wird, wie schnell ein Aufnahme-Absetz-Vorgang durchgeführt werden kann, muß man im Interesse einer hohen Förderleistung versuchen, diese Bewegungen durch regelungstechnische Maßnahmen kontrolliert erfolgen zu lassen, auf ein tragbares Maß zu reduzieren oder sogar auszunutzen. Wenn die Pendelbewegung der Last nicht ohne weiteres, beispielsweise durch Rechnersimulation, vorausberechnet werden kann, ist es für die Ausregelung der Lastpendelungen sowie für die Lastpositionierregelung erforderlich, die tatsächliche Pendelbewegung, also die sich zeitlich ändernde Istposition der Last zu erfassen.

Dieses Problem ist jedoch bisher nur teilweise gelöst. So existieren mechanische Verfahren, bei welchen die pendelnden Seile, an denen die Last hängt, Bügel verschieben, welche unterhalb der Seilumlenkung bzw. der Seiltrommel angeordnet sind. Mit einem solchen Mechanismus kann der momentane Pendelwinkel bzw. dessen Änderungsgeschwindigkeit für eine Ausregelung der Lastpendelung mit ausreichender Genauigkeit erfaßt werden. Für Lastpositionierregelungen reicht jedoch die Genauigkeit nicht aus. Darüber hinaus ist das bekannte System mechanisch empfindlich und erfordert einen hohen Wartungsaufwand.

Es ist bereits vorgeschlagen worden, die genannten Größen mit Hilfe der Lasertechnik zu erfassen, wobei an dem Kran angeordnete Laser-Entfernungsprofilmeßgeräte innerhalb eines vorgegebenen Abtastwinkelbereiches die Außenkanten der Last abtasten. Nach dem derzeitigen Stand der Technik ist es jedoch noch nicht möglich, gleichzeitig sehr hohe Meßgenauigkeiten und kurze Meßzeiten über einen größeren Abtastwinkelbereich zu erreichen. Um eine hohe Meßgenauigkeit bei noch tolerierbaren Meßzeiten zu erhalten, ist es daher erforderlich, den Abtastwinkelbereich auf wenige Grad zu beschränken. Dabei besteht aber die Gefahr, daß die Last bei größeren Pendelbewegungen aus dem Blickfeld der Laser-Entfernungsprofilmeßgeräte gerät.

Aus der WO-A-91/14644 ist weiterhin eine Einrichtung zum Transport und Positionierung von Gegenständen durch Containerkrane bekannt, bei der eine Videokamera zur Erzielung eines flächenhaften digitalen xy-Bildes und im Bereich der Last aktiv leuchtende Markierungen vorhanden sind. Dabei sind speziell die Markierungen paarweise so ausgebildet, daß zwei innere LED's eng beabstandet sind und im Nahbereich ausgewertet sind, während zwei größere LED's weiter entfernt angeordnet sind und für den Fernbereich ausgewertet werden. Die Auswertung solcher Videosignale ist entsprechend der Videoaufnahmefrequenz vergleichsweise langwierig und daher für Regelungen weniger geeignet.

Demgegenüber ist es Aufgabe der Erfindung, die Erfassung von Lastpendelungen bei Kranen mit hoher Genauigkeit und Zuverlässigkeit zu ermöglichen.

Die Aufgabe ist erfindungsgemäß dadurch gelöst, daß der Detektor eine Zeilenkamera und der Bildsensor eine Bildsensorzeile ist und daß die reflektierende Fläche in Richtung quer zur Ausrichtung der Bildsensorzeile eine vorgegebene Mindestausstreckung aufweist. Da nunmehr durch die Zeilenkamera eine eindimensionale Signalerfassung hinreichend ist, wird eine schnelle Auswertung erreicht, was für die Ausregelung der Pendelbewegungen wesentlich ist.

Bei der Erfindung kann die Markierung direkt auf der Last oder vorzugsweise an einem Lastaufnahmerahmen (Spreader) angebracht sein. Bei der Beleuchtungseinrichtung kann es sich in einfachster Weise um einen Scheinwerfer handeln. Die Markierung befindet sich bei Pendelbewegungen in Richtung der Ausstreckung der Bildsensorzeile ständig im Blickfeld der Zeilenkamera, wobei die reflektierende Fläche aufgrund der Beleuchtung aus der Sicht der Kamera sehr hell ist; dies ermöglicht kurze Belichtungszeiten und damit kurze Meßzeiten. Zu letzterem trägt im wesentlichen Maße auch bei, daß die Bilderfassung und -verarbeitung nicht flächenhaft, sondern nur entlang einer Zeile erfolgt, in der nämlich die Pendelbewegung der Last stattfindet. Dabei wird dem Umstand Rechnung getragen, daß insbesondere bei Kranen mit Katzantrieb aber auch bei Kranen mit entsprechender Aufhängung der Last an zwei oder mehr Seilen die durch die Förderung der Last verursachte Pendelbewegung im wesentlichen nur in einer Richtung erfolgt.

Damit die Markierung bei unerwünschten Pendelbewegungen quer zu der zu erfassenden Pendelbewegung nicht aus dem Blickfeld der Kamera gerät, ist in vorteilhafter Weise vorgesehen, daß die reflektierende Fläche in Richtung quer zur Ausrichtung der Bildsensorzeile eine vorgegebene Mindestausstreckung aufweist.

Für den Fall, daß, wie z. B. bei Drehkranen, Pendelbewegungen in unterschiedlichen Richtungen auftreten und auch erfaßt werden sollen, kann im Rahmen der Erfindung vorgesehen werden, daß die Ausdehnung der reflektierenden Fläche quer zur Ausrichtung der Bildsensorzeile variiert. Dabei wird die Komponente der Pendelbewegung in Richtung der Bildsensorzeile aus der Position der Abbildung der reflektierenden Fläche auf der Bildsensorzeile ermittelt und die dazu quer verlaufende Bewegungskomponente durch die Ausdehnung der auf der Bildsensorzeile abgebildeten reflektierten Fläche ermittelt. Obwohl also die Lastpendelung zweidimensional erfaßt wird, ist hierzu nur eine einzige eindimensionale Bildsensorzeile erforderlich.

Entsprechend einer dazu alternativen Ausbildung der erfindungsgemäßen Anordnung ist quer zur Ausrichtung der Bildsensorzeile eine weitere Bildsensorzeile vorgesehen, der eine weitere Auswerteeinrichtung nachgeordnet ist. Diese weitere Bildsensorzeile kann Bestandteil einer zweiten oder derselben Zeilenkamera sein, die auf die Markierung oder eine weitere Markierung gerichtet ist. Die von den beiden Auswerteeinrichtungen gelieferten Positionsdaten geben die jeweilige Komponente der Pendelbewegung in den jeweiligen Richtungen der beiden rechtwinklig zueinander ausgerichteten Sensorzeilen wieder, wobei der Vorteil besteht, daß beide Bewegungskomponenten mit jeweils den gleichen Meßmethoden und damit mit der gleichen Meßgenauigkeit erfaßt werden.

Die Erfassung von möglichen Drehbewegungen der Last wird in vorteilhafter Weise dadurch ermöglicht, daß parallel zu der Bildsensorzeile eine zusätzliche Bildsensorzeile mit einer zusätzlichen Auswerteeinrichtung vorgesehen ist, daß die Markierung in Richtung quer zur Bildsensorzeile so weit ausgedehnt ist oder eine von der Markierung in Richtung quer zur Bildsensorzeile beabstandete zusätzliche Markierung vorgesehen ist, so daß sie von der zusätzlichen Bildsensorzeile optisch erfaßt wird, wobei aus der Differenz der von den beiden Auswerteeinrichtungen gelieferten Positionsdaten die Drehbewegung der Last um die Pendelachse detektiert wird.

Um zu erreichen, daß die Markierung aus Sicht der Zeilenkamera so hell wie möglich erscheint und damit die erreichbaren Meßzeiten so kurz wie möglich sind, sind die Beleuchtungseinrichtung und die Zeilenkamera vorzugsweise direkt nebeneinander angeordnet, wobei die reflektierende Fläche der Markierung aus Tripelreflektorelementen besteht. Damit wird erreicht, daß das von der Beleuchtungseinrichtung auf die reflektierende Fläche fallende Licht in der Richtung des Lichteinfalls und damit unabhängig von dem jeweiligen, von der Hubhöhe und der Pendelbewegung abhängigen Einfallwinkel des Lichts auf die reflektierte Fläche in die Zeilenkamera zurückgestrahlt wird. Um die Pendelbewegung der Last einfacher auswerten zu können, sind die Beleuchtungseinrichtung und die Zeilenkamera vorzugsweise in unmittelbarer Nähe der Pendelaufhängung und die Markierung in der Ruheposition der Last lotrecht darunter angeordnet.

Um anstelle des von der Hubhöhe, also der Pendellänge, abhängigen Pendelwegs den davon unabhängigen Pendelwinkel erfassen zu können, ist in Weiterbildung der erfindungsgemäßen Anordnung eine Meßeinrichtung zur Bestimmung der jeweiligen Pendellänge vorgesehen, wobei das Meßsignal der Meßeinrichtung in der Auswerteeinrichtung zusammen mit dem Signal der Bildsensorzeile zur Bestimmung des Pendelwinkels und/oder der momentanen Lastposition ausgewertet wird. Bei der Meßeinrichtung kann es sich beispielsweise um einen Winkelschrittgeber oder Absolutwertgeber an der Seiltrommel des Krans handeln; es ist auch möglich, die Pendellänge durch Laserdistanzmessung zu ermitteln, bei der im Unterschied zu der eingangs erwähnten Laserwinkelmessung kurze Meßzeiten erreicht werden können.

Entsprechend einer vorteilhaften Weiterbildung der erfindungsgemäßen Anordnung ist vorgesehen, daß die reflektierende Fläche in Pendelrichtung an einer nichtreflektierenden, vorzugsweise mattschwarzen Fläche angrenzt und daß die Auswerteeinrichtung zur Bestimmung der Position der Markierung das Signal der Bildsensorzeile nach dem Auftreten des Helligkeitswechsels mit dem jeweils größten Kontrast absucht. Auf diese Weise wird also die Kante der reflektierenden Fläche zur Positionsbestimmung herangezogen, wodurch eine hohe Meßauflösung erreicht wird. Dabei ist die Ausdehnung der reflektierenden Fläche einerseits so groß bemessen, daß genügend Bildsensorelemente der Bildsensorzeile beleuchtet werden, um eine ausreichende Meßgenauigkeit zu erreichen; andererseits ist aber die Flächenausdehnung der reflektierenden Fläche nicht zu groß, weil sonst die Kanten der reflektierenden Fläche beim Pendeln der Last aus dem Blickfeld der Zeilenkamera geraten können. Da die Positionsbestimmung der Markierung nicht über eine Helligkeitsbestimmung, sondern über eine Kontrastbestimmung des Helligkeitssprunges an der Kante der reflektierenden Fläche zur nichtreflektierenden Fläche erfolgt, ist die Gefahr von Fehlmessungen aufgrund von anderen, störenden Lichtquellen gering; außerdem kann die Belichtungszeit nach dem hellsten Bereich und nicht nach dem Helligkeitsdurchschnitt im Blickfeld der Kamera reguliert werden, wodurch sehr kurze Belichtungs- und damit Meßzeiten erreicht werden.

Eine weitere Erhöhung der Meßgenauigkeit und Meßsicherheit wird dadurch erreicht, daß die reflektierende Fläche in Pendelrichtung eine vorgegebene Ausdehnung aufweist und daß die Auswerteeinrichtung das Signal der Bildsensorzeile nach dem Auftreten der beiden Helligkeitswechsel mit dem jeweils größten Kontrast absucht und aus der Mitte zwischen den beiden Helligkeitswechseln die Position der Mitte der Markierung bestimmt. Auf diese Weise werden also in der Richtung der Ausstreckung der Bildsensorzeile die beiden äußeren Kanten der reflektierenden Fläche erfaßt und die Position der Markierung aus der Mitte zwischen den beiden Kanten abgeleitet.

Entsprechend einer vorteilhaften Weiterbildung der erfindungsgemäßen Anordnung ist vorgesehen, daß an dem Kran mindestens ein Laser-Entfernungsprofilmeßgerät angeordnet ist, das innerhalb eines längs zur Pendelrichtung geöffneten Abtastwinkelbereiches einen auf eine quer zur Pendelrichtung verlaufende Außenkante der Last gerichteten Laserstrahl erzeugt und aus dem zurücklaufenden Laserlicht weitere Positionsdaten der Last ermittelt, und daß der Zeilenkamera und dem Laser-Entfernungsprofilmeßgerät eine Verknüpfungseinrichtung zur Verknüpfung der von der Zeilenkamera gelieferten Positionsdaten und der von dem Laser-Entfernungsprofilmeßgerät gelieferten weiteren Positionsdaten aufweist. Auf diese Weise werden die Vorteile, die sich bei der Positionsbestimmung mit Hilfe von Laser-Entfernungsprofilmeßgeräten ergeben, mit denen der Positionsbestimmung mittels einer Zeilenkamera verbunden, wobei gleichzeitig die jeweiligen Nachteile beider Meßverfahren eliminiert werden. So erlauben die Laser-Entfernungsprofilmeßgeräte die momentane Positionsbestimmung der Last sowohl in horizontaler als auch in vertikaler Richtung, wobei in der Endphase der Annäherung der Last an das Ziel auch die Position des Zieles erfaßbar ist. Andererseits erzwingt eine hohe Meßgenauigkeit bei noch ausreichend kurzen Meßzeiten einen kleinen Abtastwinkelbereich, so daß die Last bei größeren Pendelungen aus dem Abtastwinkelbereich geraten kann. Für eine Pendeldämpfungs- und Positionierregelung sind die erreichbaren Meßzeiten immer noch relativ lang. Die Zeilenkamera weist den Vorteil eines größeren Erfassungswinkels und kürzerer Meßzeiten auf. Jedoch lassen sich mit der Zeilenkamera nur Positionsänderungen der Last in horizontaler Richtung erfassen. Die oben genannte Weiterbildung der erfindungsgemäßen Anordnung verbindet nun die genannten Vorteile bei gleichzeitiger Eliminierung der Nachteile.

Im einfachsten Fall weist die Verknüpfungseinrichtung eine Umschalteinrichtung auf, die ein Umschalten zwischen den Positionsdaten des Laser-Entfernungsprofilmeßgerätes und denen der Zeilenkamera ermöglicht. Dabei erfolgt eine Umschaltung von dem Laser-Entfernungsprofilmeßgerät auf die Zeilenkamera, wenn die Last aus dem Abtastwinkelbereich des Laser-Entfernungsprofilmeßgerätes gerät oder wenn aufgrund sehr schneller Pendelbewegungen der Last die Meßzeiten des Laser-Entfernungsprofilmeßgerätes zu langsam sind.

Vorzugsweise erfolgt in der Verknüpfungseinrichtung eine gegenseitige Plausibilitätsüberwachung und/oder Korrektur der Positionsdaten von dem Laser-Entfernungsprofilmeßgerät und der Zeilenkamera.

Da mit der Zeilenkamera wesentlich kürzere Meßzeiten erreicht werden als mit dem Laser-Entfernungsprofilmeßgerät, ist in vorteilhafter Weise vorgesehen, daß in der Verknüpfungseinrichtung die von der Zeilenkamera kommenden Positionsdaten als Zwischenwerte zwischen die von dem Laser-Entfernungsprofilmeßgerät kommenden weiteren Positionsdaten eingefügt werden.

Ergänzend zu den Laser-Entfernungsprofilmeßgeräten und der Zeilenkamera können zur unmittelbaren Kollisionsüberwachung in Pendelrichtung Ultraschallsensoren im Bereich der Last angeordnet sein.

Zur Erläuterung der Erfindung wird im folgenden auf die Figuren der Zeichnung Bezug genommen; im einelnen zeigen:

FIG 1    einen Containerkran mit der erfindungsgemäßen Anordnung bestehend aus einer Markierung, einem Scheinwerfer und einer Zeilenkamera,

FIG 2    ein Beispiel für die Anordnung der Markierung in bezug auf die Ausrichtung der Zeilenkamera,

FIG 3    ein schematisches Blockschaltbild der Zeilenkamera,

FIG 4,5  unterschiedliche Beispiele für die Ausformung oder Anordnung der Markierung in bezug auf die Zeilenkamera,

FIG 6    einen Containerkran wie in FIG 1, der zusätzlich mit Laser-Entfernungsprofilmeßgeräten bestückt ist,

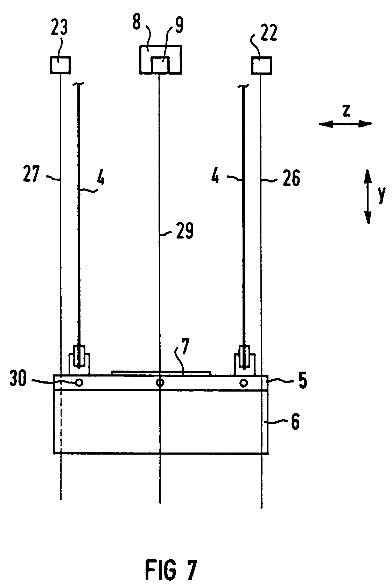

FIG 7    den Kran nach FIG 6 in einer um 90° gedrehten Seitenansicht,

FIG 8    eine Draufsicht auf die an dem Kran nach FIG 6 hängende Last und

FIG 9    das Blockschaltbild einer Steuerungsstruktur für den Kran nach FIG 6.

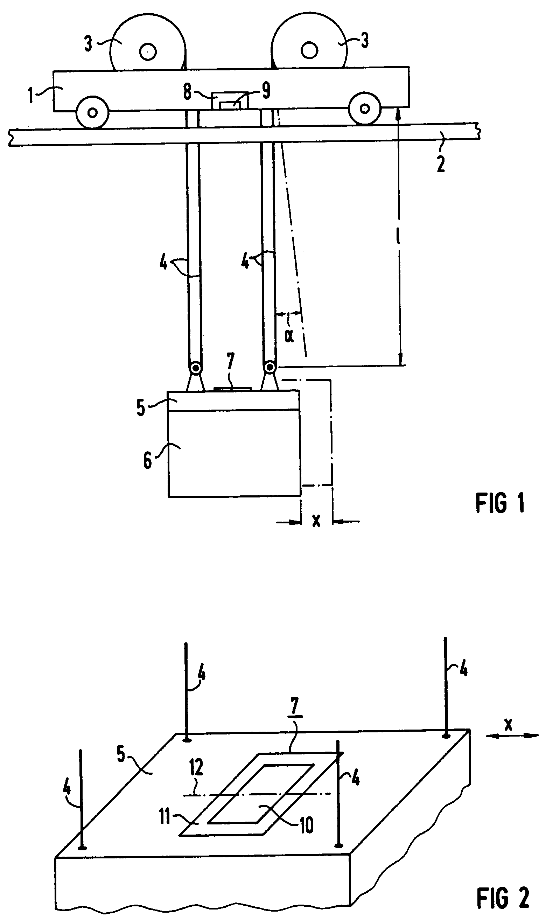

Figur 1 zeigt schematisch eine Laufkatze 1, die entlang eines hier nur abschnittsweise dargestellten Auslegers 2 eines Containerkrans verfahrbar ist. Auf der Katze 2 sind Hubwinden 3 angeordnet, an denen über Seile 4 ein Lastaufnahmerahmen (Spreader) 5 für eine zu transportierende Last 6, hier ein Container, hängt. Durch das Anfahren und Abbremsen der Laufkatze 1 aber auch durch äußere Störeinflüsse, wie z.B. Windkräfte, kann die Last 6 in eine Pendelbewegung versetzt werden, wie dies durch die gestrichelt dargestellte Auslenkung der Last 6 um einen Pendelwinkel $\alpha$ bzw. um eine Wegstrecke x verdeutlicht ist.

Um die Pendelbewegung der Last 6 messen zu können, ist auf dem Lastaufnahmerahmen 5 eine Markierung 7 angebracht, die von einem bei Ruhestellung der Last 6 lotrecht über dieser an der Laufkatze 1 gehaltenen Scheinwerfer 8 beleuchtet wird, wobei das von der Markierung 7 reflektierte Licht von einer unmittelbar neben oder in dem Scheinwerfer 8 angeordneten Zeilenkamera 9 erfaßt wird.

Figur 2 zeigt in einer schematischen perspektivischen Darstellung den an den Seilen 4 aufgehängten Lastaufnahmerahmen 5 mit der darauf angeordneten Markierung 7, die aus einer rechteckförmigen, mit einer Kantenseite parallel zur Pendelrichtung x ausgerichteten reflektierenden Fläche 10 besteht, welche von einer nichtreflektierenden Fläche 11 umgeben ist. Die reflektierende Fläche 10 besteht aus einer Vielzahl von hier nicht gezeigten Tripelreflektorelementen, die auf sie auftreffendes Licht in die Richtung zurückstrahlen, aus der es gekommen ist. Dadurch wird sichergestellt, daß das von dem Scheinwerfer 8 abgestrahlte Licht von der reflektierenden Fläche in die dem Scheinwerfer 8 unmittelbar benachbarte Zeilenkamera 9 zurückgestrahlt wird, und zwar unabhängig von dem jeweiligen Betrag der Pendelauslenkung x. Die Zeilenkamera 9 ist derart an der Laufkatze 1 angeordnet, daß ihre Abtastebene die Markierung 7 längs zur Pendelrichtung x schneidet, wie dies durch die strichpunktierte Linie 12 angedeutet ist, die den von der Zeilenkamera 9 erfaßten Bereich der Markierung 7 bezeichnet.

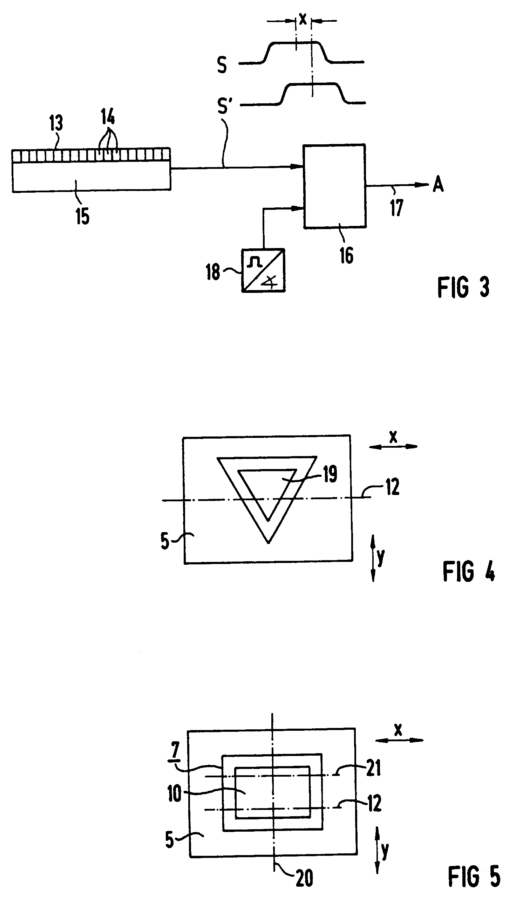

Wie Figur 3 zeigt, weist die Zeilenkamera 9 eine Bildsensorzeile 13 mit einer Vielzahl von nebeneinanderliegenden Bildsensorelementen 14 auf, deren Bildinformationen parallel in ein Schieberegister 15 überführt und von dort seriell an eine Auswerteeinrichtung 16 weitergeleitet werden. Zur Erfassung der Position der Markierung 7 sucht die Auswerteeinrichtung 16 das serielle Signal S der Bildsensorzeile 13 nach dem Auftreten der beiden Helligkeitswechsel mit dem jeweils größten Kontrast ab und detektiert auf diese Weise die quer zur Abtastrichtung 12 verlaufenden Kanten der reflektierenden Fläche 10. Aus der Mitte zwischen den beiden detektierten Helligkeitswechseln wird in der Auswerteeinrichtung die Position der Mitte der Markierung 7 bestimmt und als Ausgangssignal A über den Ausgang 17 der Auswerteeinrichtung 16 für eine weitere Verarbeitung beispielsweise im Rahmen einer Lastpositionierregelung oder einer Ausregelung der Pendelschwingungen zur Verfügung gestellt. Bei einer Pendelbewegung um die Weglänge x ergibt sich eine entsprechende Verschiebung in dem Signalverlauf S' der Bildsensorzeile 13, woraus in der Auswerteeinrichtung 16 die Weglänge x detektiert wird. Zur Erfassung des Pendelwinkels $\alpha$ wird mit Hilfe eines Winkelschrittgebers 18 oder eines Absolutwertgebers an einer der Seilwinden 3 die Hubhöhe und damit die Pendellänge l gemessen und der Auswerteeinrichtung 16 zugeführt, in der der Pendelwinkel zu $\alpha = \arcsin x/l$ ermittelt wird. Damit die Markierung 7 bei unerwünschten Pendelbewegungen quer zu der zu erfassenden Pendelbewegung x nicht aus dem Blickfeld der Zeilenkamera 9 gerät, weist die Markierung 7 in Richtung quer zur Ausrichtung 12 der Bildsensorzeile 13 eine vorgegebene Mindestbreite auf.

Wie Figur 4 zeigt, können auch Pendelbewegungen quer zur Ausrichtung 12 der Bildsensorzeile 13 erfaßt werden, indem die reflektierende Fläche 19 eine quer zur Ausrichtung 12 der Bildsensorzeile 13 variierende Breite aufweist. Dabei wird die Komponente x der Pendelbewegung in Richtung der Bildsensorzeile 13 aus der Position der Abbildung der reflektierenden Fläche 19 auf der Bildsensorzeile ermittelt und die dazu quer verlaufende Bewegungskomponente y über den der Bildsensorzeile 13 erfaßten Kantenabstand der reflektierenden Fläche 19 bestimmt.

Alternativ dazu kann, wie in Figur 5 durch eine weitere strichpunktierte Linie 20 angedeutet ist, eine weitere Bildsensorzeile vorgesehen werden, die quer zu der ersten Bildsensorzeile 13 angeordnet ist und auf dieselbe Weise wie diese Pendelbewegungen in y-Richtung erfaßt. Drehbewegungen der Markierung 7 werden dadurch erfaßt, daß parallel zu der Bildsensorzeile 13 und im Abstand zu dieser eine zusätzliche Bildsensorzeile angeordnet ist, die den mit 21 bezeichneten Bereich der Markierung 7 optisch erfaßt. Dabei wird, wie anhand von Figur 2 beschrieben, sowohl in Abtastrichtung 12 als auch in Abtastrichtung 21 jeweils die Mitte zwischen den von den beiden Abtastrichtungen 12 und 21 geschnittenen Kanten der reflektierenden Fläche 10 ermittelt. Aus der Differenz der Ausgangssignale der den beiden parallelen Bildsensorzeilen nachgeordneten Auswerteeinrichtungen kann somit eine Drehbewegung der Last detektiert werden.

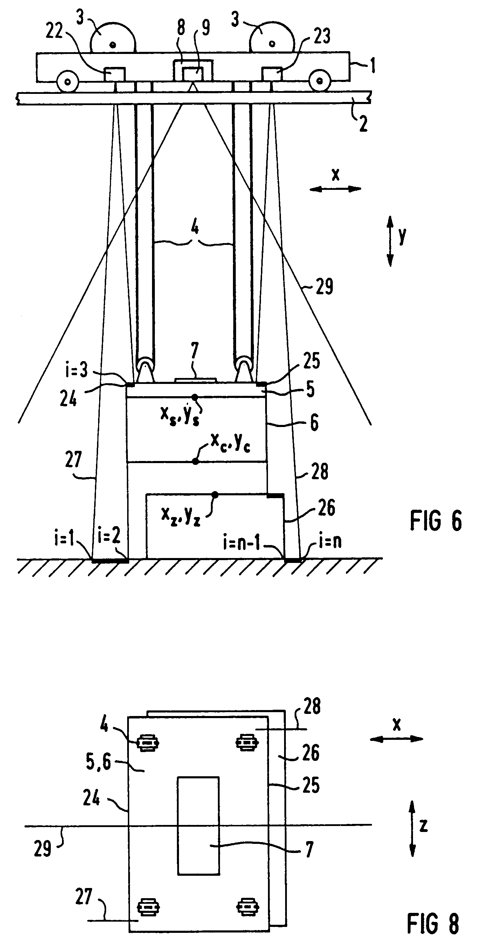

FIG 6 zeigt einen Containerkran, der sich von dem in FIG 1 gezeigten Kran durch zusätzliche zwei Laser-Entfernungsprofilmeßgeräte 22 und 23 unterscheidet, die an der Laufkatze 1 über den beiden zur Verfahrrichtung x der Katze 1 quer verlaufenden Außenkanten 24 und 25 des Lastaufnahmerahmens 5 bzw. der Last 6 angeordnet sind. Die beiden Laser-Entfernungsprofilmeßgeräte 22 und 23 ermöglichen es, die jeweils momentane Lastposition in bezug auf die Umgebung der Last 6 zu messen, so daß ein positionsgenaues Absetzen der Last 6 auf einem bereits abgestellten weiteren Container (Zielcontainer) 26 möglich ist. Jedes der beiden Laser-Entfernungsprofilmeßgeräte 22 und 23 erzeugt jeweils einen Laserstrahl 27 bzw. 28, der in einem längs zur Pendelrichtung x geöffneten und die dem jeweiligen Laser-Entfernungsprofilmeßgerät 22 bzw. 23 gegenüberliegende Außenkante 24 bzw. 25 senkrecht schneidenden Abtastwinkelmeßbereich abgelenkt wird. In FIG 6 sind diejenigen Stellen auf dem Lastaufnahmerahmen 5 bzw. der Last 6 und deren Umgebung, auf die die Laserstrahlen 27 und 28 auftreffen, durch eine dickere Strichstärke hervorgehoben. Durch Auswertung der Laufzeit des Laserlichts und des jeweiligen momentanen Abstrahlwinkels des Laserstrahls 27 bzw. 28 kann für jede Stelle, auf die der Laserstrahl 27 bzw. 28 auftrifft, deren Positionskoordinaten in der horizontalen x-Richtung und der vertikalen y-Richtung bestimmt werden. Wie FIG 6 zeigt, erfassen die Laserstrahlen 27 und 28 bei Annäherung der Last 6 an den Zielcontainer 26 auch Bereiche des Zielcontainers 26, solange die Last 6 nicht exakt über diesem positioniert ist. Sobald beide Laserstrahlen 27 und 28 nicht mehr auf den Zielcontainer 26 auftreffen, ist der Container 6 direkt über dem Zielcontainer 26 positioniert und kann auf diesen abgesenkt werden.

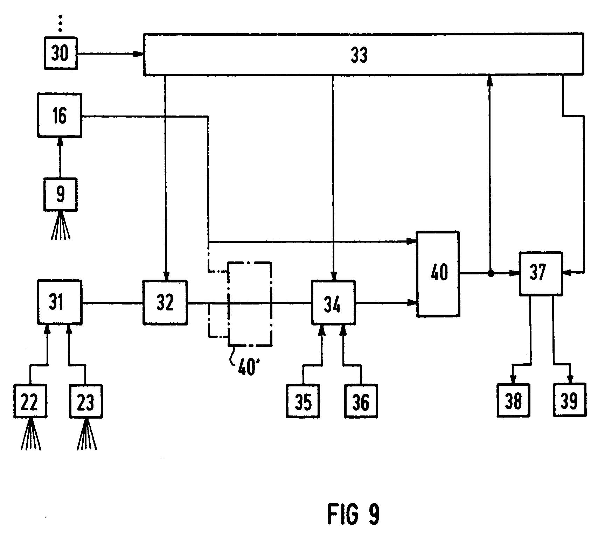

Die optimale Position der beiden Laser-Entfernungsprofilmeßgeräte 22 und 23 in x-Richtung ist nicht unmittelbar über den jeweiligen Außenkanten 24 bzw. 25 des Lastaufnahmerahmens 5 bzw. der Last 6, sondern etwas außerhalb davon, so daß unterhalb der Außenkanten 24 und 25 kein für die Laserstrahlen 27 und 28 unzugänglicher toter Winkel entsteht. Wie die Draufsicht auf den Lastaufnahmerahmen 5 mit der Last 6 gemäß FIG 8 zeigt, sind ferner die beiden Laser-Entfernungsprofilmeßgeräte 22 und 23 mit ihren Abtastwinkelbereichen 27 und 28 quer zur x-Richtung, also in z-Richtung versetzt angeordnet. Dadurch ist es möglich, außer Pendelbewegungen in x-Richtung auch Drehpendelungen der Last 6 zu messen, die sich darin äußern, daß sich die mit den Laserstrahlen 27 und 28 gemessenen x-Koordinaten der Außenkanten 24 und 25 zeitlich unterschiedlich ändern. Der Lastaufnahmerahmen 5 ist in z-Richtung in seiner Längsrichtung hydraulisch verstellbar und kann somit der aktuellen Containerlänge angepaßt werden. Da der Container 6 oben offen oder durch eine unregelmäßige Plane abgedeckt sein kann, lassen sich die Außenkanten 24 und 25 mittels der Laserstrahlen 27 und 28 am sichersten dort abtasten, wo zwischen den Außenkanten 24 und 25 die zur x-Richtung parallelen Außenwände des Containers 6 verlaufen. Um die Außenkanten 24 und 25 bei verschiedenen Containerlängen an diesen Stellen abtasten zu können, sind daher die beiden Laser-Entfernungsprofilmeßgeräte 22 und 23 in z-Richtung verschiebbar an der Laufkatze 1 angeordnet.

Mit den beiden Laser-Entfernungsprofilmeßgeräten 22 und 23 ist es nach dem derzeitigen Stand der Technik noch nicht möglich, gleichzeitig sehr hohe Meßgenauigkeiten und kurze Meßzeiten über einen größeren Abtastwinkelbereich zu erreichen. Um eine hohe Meßgenauigkeit bei noch tolerierbaren Meßzeiten zu erhalten, ist es daher erforderlich, den Abtastwinkelbereich auf wenig Grad zu beschränken. Dabei besteht die Gefahr, daß die Last 6 bei größeren Pendelbewegungen aus dem Blickfeld der Laser-Entfernungsprofilmeßgeräte 22 bzw. 23 gerät. Außerdem sind auch die bei kleinem Abtastwinkelbereich erreichbaren Meßzeiten für eine Heranziehung der erhaltenen Meßwerte zur automatischen Lastpendeldämpfungs- oder Lastpositionierregelung relativ lang.

Daher ist auf dem Lastaufnahmerahmen 5 die Markierung 7 angebracht, die von dem bei Ruhestellung der Last 6 vertikal über dieser an der Laufkatze 1 gehaltenen Scheinwerfer 8 beleuchtet wird, wobei das von der Markierung 7 reflektierte Licht von der unmittelbar neben oder in dem Scheinwerfer 8 angeordneten Zeilenkamera 9 erfaßt wird. Die Zeilenkamera 9 ist derart an der Laufkatze 1 angeordnet, daß ihre Abtastebene 29 die Markierung 7 längs zur Pendelrichtung x schneidet. Mit der Zeilenkamera kann die Position der Last 6 in x-Richtung auch noch bei größeren Pendelbewegungen der Last 6 erfaßt werden, so wie dies anhand der Figuren 1 - 3 bereits beschrieben wurde.

Zur Kollisionsüberwachung in x-Richtung sind zusätzlich im Bereich der beiden Außenkanten 24 und 25 des Lastaufnahmerahmens 5 Ultraschallsensoren 30 angeordnet.

Bei der Anordnung der Laser-Entfernungsprofilmeßgeräte 22, 23 und der Zeilenkamera 9 wurde davon ausgegangen, daß Lastpendelungen hauptsächlich in der Verfahrrichtung x der Laufkatze 1 erfolgen. Sollen auch mögliche Pendelungen quer dazu erfaßt werden, so kann dies mit einer weiteren Anordnung zweier Laser-Entfernungsprofilmeßgeräte und einer Zeilenkamera in z-Richtung erfolgen.

FIG 9 zeigt das Blockschaltbild einer Steuerungsstruktur für den Containerkran nach FIG 6. Die beiden Laser-Entfernungsprofilmeßgeräte 22 und 23 sind an einer gemeinsamen Einrichtung 31 zur Datenvorverarbeitung angeschlossen, die aus den innerhalb der Abtastwinkelbereiche 27 und 28 von der Last 6 und deren Umgebung erhaltenen Abtastwerten die Koordinaten $x_i$ und $y_i$ aller erfaßten Kanten i=1...n der in FIG 6 durch dickere Strichstärken hervorgehobenen Bereiche ermittelt. Diese im Koordinatensystem der Laufkatze 1 ermittelten Kantenkoordinaten werden einer Einheit 32 zur Koordinatenextraktion zugeführt, in der aus den Kantenkoordinaten und von einer übergeordneten Steuereinheit 33 mitgeteilten Außenabmessungen der Container 6 und 26 und des Lastaufnahmerahmens 5 die Positionskoordinaten $x_s$, $y_s$ des Lastaufnahmerahmens 5, die Lastkoordinaten $x_c$, $y_c$ der Last 6 und/oder die Koordinaten $x_z$, $y_z$ des Zielcontainers 26, auf dem die Last 6 abgestellt werden soll, berechnet werden. Zusätzlich zu diesen Positionskoordinaten werden auch die Verdrehwinkel des Lastaufnahmerahmens 5, der Last 6 und des Zielcontainers 26 gegenüber der Laufkatze 1 berechnet. Schließlich liefert die Einheit 32 die Koordinaten möglicher Kollisionsobjekte, die in Verfahrrichtung x gesehen vor oder hinter dem Zielcontainer 26 liegen können.

In einer weiteren Einheit 34 können die in bezug auf die Laufkatze 1 ermittelten Positionskoordinaten in kranbezogene oder landbezogene Koordinaten umberechnet werden, wozu der Einheit 34 von einer Katzpositionsmeßeinrichtung 35 und einer Kranpositionsmeßeinrichtung 36 die jeweils aktuelle Position der Laufkatze 1 und des Containerkrans mitgeteilt werden. Die so umgerechneten Koordinatenwerte werden der übergeordneten Steuereinheit 33 als Positionsistwerte zur Kransteuerung zugeführt.

Darüber hinaus werden die in der Einheit 34 errechneten Positionskoordinaten einer Einrichtung 37 zur Pendeldämpfungs- und Positionierregelung zugeführt, die in Abhängigkeit von den Koordinatenwerten und von durch die Steuereinheit 33 mitgeteilten Fahrdaten, wie z. B. aktuelle Geschwindigkeits- und Beschleunigungswerte der Laufkatze 1 und der Hubwinden 3, eine zeitoptimale und Pendelungen der Last 6 dämpfende Steuerung des Antriebs 38 für die Laufkatze 1 und des Antriebs 39 für die Hubwinden 3 durchführt.

Die von der Zeilenkamera 9 erfaßte und in der Signalauswerteeinheit 16 in eine x-Koordinate umgerechnete Position des Lastaufnahmerahmens 5 bzw. der Last 6 wird der übergeordneten Steuereinrichtung 26 und der Einrichtung 37 als ergänzender bzw. alternativer Wert zu dem entsprechenden, über die Laser-Entfernungsprofilmeßgeräte 22 und 23 ermittelten Positionswert zugeführt. Dazu werden die von den Laser-Entfernungsprofilmeßgeräten 22 und 23 und von der Zeilenkamera 9 kommenden Lastpositionswerte in x-Richtung in einer Verknüpfungseinrichtung 40 miteinander verknüpft, bevor sie der Steuereinheit 33 und der Einrichtung 37 aufgegeben werden. Die Verknüpfung besteht im einfachsten Fall aus einer Umschaltung zwischen den beiden Werten, wobei jedes Mal dann von den Laser-Entfernungsprofilmeßgeräten 22 und 23 auf die Zeilenkamera 9 umgeschaltet wird, wenn der Lastaufnahmerahmen 5 bzw. die Last 6 aus den Abtastwinkelbereichen 27 und 28 herausgerät. Darüber hinaus können die von den Laser-Entfernungsprofilmeßgeräten 22 und 23 und der Zeilenkamera 9 gelieferten Positionswerte redundant verwendet werden, wobei mit Hilfe der redundant erhaltenen Werte eine gegenseitige Plausibilitätskontrolle und/oder Korrektur der Werte erfolgt. Die mit einer wesentlich höheren Meßrate von der Zeilenkamera 9 erhaltenen Positionswerte dienen zur Komplettierung der mit einer niedrigeren Meßrate von den Laser-Entfernungsprofilmeßgeräten 22 und 23 kommenden Positionswerte, so daß insbesondere bei sich schnell ändernden Lastpositionen, wie z. B. heftigen Pendelbewegungen, genaue Meßwerte mit der erforderlichen hohen Meßrate für die Pendeldämpfungs- und Positionierregelung in der Einheit 37 zur Verfügung stehen.

Wie in FIG 9 gestrichelt angedeutet ist, kann die Verknüpfungseinrichtung 40' auch im Signalweg vor der Einheit 34 angeordnet sein.

Zur unmittelbaren Kollisionsüberwachung sind die Ultraschallsensoren 30 direkt an der Steuereinheit 33 angeschlossen.

**Patentansprüche**

1. Anordnung zum meßtechnischen Erfassen von Lastpendelungen bei Kranen, wobei im Bereich der Last (6) eine Markierung (7) mit einer reflektierenden Fläche (10) und am Kran eine auf die Markierung (7) gerichtete Beleuchtungseinrichtung (8) angeordnet sind und wobei am Kran ein auf die Markierung (7) gerichteter Detektor (9) mit einem längs zur Pendelrichtung ausgerichteten Bildsensor (13) angeordnet und dem Detektor (9) eine Auswerteeinrichtung (16) nachgeordnet ist, die aus dem Signal (S, S') des Bildsensors (13) Positionsdaten der Last ermittelt, **dadurch gekennzeichnet**, daß der Detektor eine Zeilenkamera (9) und der Bildsensor eine Bildsensorzeile (13) sind und daß die reflektierende Fläche (10) in Richtung quer zur Ausrichtung (12) der Bildsensorzeile (13) eine vorgegebene Mindestausstreckung aufweist.

2. Anordnung nach Anspruch 1, **dadurch gekennzeichnet**, daß die Ausdehnung der reflektierenden Fläche (19) quer zur Ausrichtung (12) der Bildsensorzeile (13) variiert.

3. Anordnung nach Anspruch 1, **dadurch gekennzeichnet**, daß quer zur Ausrichtung (12) der Bildsensorzeile (13) eine weitere Bildsensorzeile (20) vorgesehen ist, der eine weitere Auswerteeinrichtung nachgeordnet ist.

4. Anordnung nach einem der vorangehenden Ansprüche, **dadurch gekennzeichnet**, daß parallel zu der Bildsensorzeile (13) eine zusätzliche Bildsensorzeile (21) mit einer zusätzlichen Auswerteeinrichtung vorgesehen ist, daß die Markierung (7) in Richtung quer zur Bildsensorzeile (13) so weit ausgedehnt ist oder eine von der Markierung in Richtung quer zur Bildsensorzeile beabstandete zusätzliche Markierung vorgesehen ist, so daß sie von der zusätzlichen Bildsensorzeile (21) optisch erfaßt wird, und daß aus der Differenz der von den beiden Auswerteeinrichtungen gelieferten Positionsdaten eine Drehbewegung der Last (6) um die Pendelachse detektiert wird.

5. Anordnung nach einem der vorangehenden Ansprüche, **dadurch gekennzeichnet**, daß die Beleuchtungseinrichtung (8) und die Zeilenkamera (9) direkt nebeneinander angeordnet sind und daß die reflektierende Fläche (10) der Markierung (7) aus Tripelreflektorelementen besteht.

6. Anordnung nach einem der vorangehenden Ansprüche, **dadurch gekennzeichnet**, daß die Beleuchtungseinrichtung (8) und die Zeilenkamera (9) in unmittelbarer Nähe der Pendelaufhängung und die Markierung (7) in der Ruheposition der Last (6) lotrecht darunter angeordnet sind.

7. Anordnung nach einem der vorangehenden Ansprüche, **dadurch gekennzeichnet**, daß eine Meßeinrichtung (18) zur Bestimmung der jeweiligen Pendellänge (l) vorgesehen ist und daß das Meßsignal der Meßeinrichtung (18) in der Auswerteeinrichtung (16) zusammen mit dem Signal (S) der Bildsensorzeile (13) zur Bestimmung des Pendelwinkels ($\alpha$) und/oder der momentanen Lastposition ausgewertet wird.

8. Anordnung nach einem der vorangehenden Ansprüche, **dadurch gekennzeichnet**, daß die reflektierende Fläche (10) in Pendelrichtung an einer nichtreflektierenden, vorzugsweise mattschwarzen Fläche (11) angrenzt und daß die Auswerteeinrichtung (16) zur Bestimmung der Position der Markierung (7) das Signal der Bildsensorzeile (13) nach dem Auftreten des Helligkeitswechsels mit dem größten Kontrast absucht.

9. Anordnung nach Anspruch 9, **dadurch gekennzeichnet**, daß die reflektierende Flache (10) in Pendelrichtung (x) eine vorgegebene Ausdehnung aufweist und daß die Auswerteeinrichtung (16) das Signal (S, S') der Bildsensorzeile (13) nach dem Auftreten der beiden Helligkeitswechsel mit dem jeweils größten Kontrast absucht und aus der Mitte zwischen den beiden Helligkeitswechseln die Position der Mitte der Markierung (7) bestimmt.

10. Anordnung nach einem der vorangehenden Ansprüche, **dadurch gekennzeichnet**, daß an dem Kran mindestens ein Laser-Entfernungsprofilmeßgerät (22, 23) angeordnet ist, das innerhalb eines längs zur Pendelrichtung (x) geöffneten Abtastwinkelbereichs (27, 28) einen auf eine quer zur Pendelrichtung (x) verlaufende Außenkante (24, 25) der Last (5, 6) gerichteten Laserstrahl erzeugt und aus dem zurücklaufenden Laserlicht weitere Positionsdaten der Last (5, 6) ermittelt, und daß der Zeilenkamera (9) und dem Laser-Entfernungsprofilmeßgerät (22, 23) eine Verknüpfungseinrichtung (40) zur Verknüpfung der von der Zeilenkamera (9) gelieferten Positionsdaten und der von dem Laser-Entfernungsprofilmeßgerät (22, 23) gelieferten weiteren Positionsdaten aufweist.

11. Anordnung nach Anspruch 10, **dadurch gekennzeichnet**, daß die Verknüpfungseinrichtung (40) eine Umschalteinrichtung aufweist, die ein Umschalten zwischen den Positionsdaten des Laser-Entfernungsprofilmeßgerätes (22, 23) und denen der Zeilenkamera (9) ermöglicht.

12. Anordnung nach Anspruch 10 oder 11, **dadurch gekennzeichnet**, daß in der Verknüpfungseinrichtung (40) eine gegenseitige Plausibilitätsüberprüfung und/oder Korrektur der Positionsdaten von dem Laser-Entfernungsprofilmeßgerät (22, 23) und der Zeilenkamera (9) erfolgt.

13. Anordnung nach Anspruch 10 oder 12, **dadurch gekennzeichnet**, daß in der Verknüpfungseinrichtung (40) die von der Zeilenkamera (9) kommenden Positionsdaten als Zwischenwerte zwischen die von dem Laser-Entfernungsprofilmeßgerät (22, 23) kommenden weiteren Positionsdaten eingefügt werden.

14. Anordnung nach einem der vorangehenden Ansprüche, **dadurch gekennzeichnet**, daß im Bereich der Last (6) Ultraschallsensoren (30) zur Kollisionsüberwachung in Pendelrichtung (x) angeordnet sind.

**Claims**

1. Arrangement for acquiring load pendulum oscillations by measuring methods in the case of cranes, a marking (7) with a reflective surface (10) being disposed in the area of the load (6) and a lighting device (8) directed at the marking (7) being disposed on the crane, and a detector (9) directed at the marking (7) with an image sensor (13) oriented longitudinally to the direction of swing being disposed on the crane and an evaluation device (16) being arranged downstream of the detector (9), which device ascertains positional data of the load from the signal (S, S') of the image sensor (13), characterized in that the detector is a line-scanning camera (9) and the image sensor is an image-sensor linear array (13) and that the reflective surface (10) extends by a specified minimum distance in the direction at right angles to the orientation (12) of the image-sensor linear array (13).

2. Arrangement according to claim 1, characterized in that the extension of the reflective surface (19) varies at right angles to the orientation (12) of the image-sensor linear array (13).

3. Arrangement according to claim 1, characterized in that provided at right angles to the orientation (12) of the image-sensor linear array (13) is a further image-sensor linear array (20), arranged downstream of which is a further evaluation device.

4. Arrangement according to any of the preceding claims, characterized in that provided parallel to the image-sensor linear array (13) is an additional image-sensor linear array (21) with an additional evaluation device, that the marking (7) is extended so far in the direction at right angles to the image-sensor linear array (13) or an additional marking is provided at a distance from the marking in the direction at right angles to the image-sensor linear array so that it is acquired visually by the additional image-sensor linear array (21), and that from the difference between the positional data supplied by the two evaluation devices a rotary motion of the load (6) around the pendulum axis is detected.

5. Arrangement according to any of the preceding claims, characterized in that the lighting device (8) and the line-scanning camera (9) are disposed directly adjacent to one another and that the reflective surface (10) of the marking (7) consists of triple reflector elements.

6. Arrangement according to any of the preceding claims, characterized in that the lighting device (8) and the line-scanning camera (9) are disposed in the immediate vicinity of the pendulum suspension system and the marking (7) vertically underneath in the resting position of the load (6).

7. Arrangement according to any of the preceding claims, characterized in that a measuring device (18) is provided for determining the respective pendulum length (1) and that the measuring signal of the measuring device (18) is evaluated in the evaluation device (16) together with the signal (S) of the image-sensor linear array (13) to determine the angle of swing ($\alpha$) and/or the momentary load position.

8. Arrangement according to any of the preceding claims, characterized in that the reflective surface (10) borders in the direction of swing on a non-reflective, preferably matt-black surface (11) and that the evaluation device (16) searches for the signal of the image-sensor linear array (13) following the occurrence of the brightness change with the greatest contrast to determine the position of the marking (7).

9. Arrangement according to claim 9, characterized in that the reflective surface (10) has a specified extension in the direction of swing (x) and that the evaluation device (16) searches for the signal (S, S') of the image-sensor linear array (13) following the occurrence of the two brightness changes with the greatest contrast in each case and determines the position of the middle of the marking (7) from the middle between the two brightness changes.

10. Arrangement according to any of the preceding claims, characterized in that disposed on the crane is at least one laser ranging and scanning device (22, 23), which generates a laser beam directed at an outer edge (24, 25) of the load (5, 6) running at right angles to the direction of swing (x) within an angular scanning range (27, 28) opened longitudinally to the direction of swing (x) and from the returning laser light ascertains further positional data of the load (5, 6), and that the line-scanning camera (9) and the laser ranging and scanning device (22, 23) have a logic device (40) for linking the positional data supplied by the line-scanning camera (9) and the additional positional data supplied by the laser ranging and scanning device (22, 23).

11. Arrangement according to claim 10, characterized in that the logic device (40) has a switching device, which facilitates a switch between the positional data of the laser ranging and scanning device (22, 23) and that of the line-scanning camera (9).

12. Arrangement according to claim 10 or 11, characterized in that a reciprocal plausibility check and/or correction of the positional data of the laser ranging and scanning device (22, 23) and the line-scanning camera (9) is performed in the logic device (40).

13. Arrangement according to claim 10 or 12, characterized in that in the logic device (40) the positional data coming from the line-scanning camera (9) are inserted as intermediate values between the additional positional data coming from the laser ranging and scanning device (22, 23).

14. Arrangement according to any of the preceding claims, characterized in that ultrasound sensors (30) are disposed in the area of the load (6) for collision monitoring in the direction of swing (x).

## Revendications

1. Dispositif destiné à la détection d'oscillations de charges de grues par une technique de mesure, dans lequel il est disposé, dans la zone de la charge (6), un repérage (7) à surface réfléchissante (10), et sur la grue un dispositif d'éclairage (8) dirigé sur le repérage (7), un détecteur (9) comportant un capteur d'image (13) dirigé longitudinalement par rapport à la direction d'oscillation étant dirigé sur le repérage (7), et un dispositif (16) d'exploitation étant disposé après le détecteur (9) et déterminant des données de position de la charge à partir du signal (S, S') du capteur d'image (13), caractérisé par le fait que le détecteur est une caméra (9) à réseau linéaire et le capteur d'image une ligne de captage d'image (13), et que dans le sens transversal à la direction (12) de la ligne de captage d'image (13), la surface réfléchissante (10) présente une étendue minimale donnée à l'avance.

2. Dispositif selon la revendication 1, caractérisé par le fait que l'étendue de la surface réfléchissante (19) varie transversalement à la direction (12) de la ligne de captage d'image (13).

3. Dispositif selon la revendication 1, caractérisé par le fait qu'il est prévu transversalement à la direction (12) de la ligne de captage d'image (13) une autre ligne de captage d'image (20) derrière laquelle est disposé un autre dispositif d'exploitation.

4. Dispositif selon l'une quelconque des revendications précédentes, caractérisé par le fait qu'une ligne de captage d'image (21) supplémentaire avec un dispositif d'exploitation supplémentaire est prévue parallèlement à la ligne de captage d'image (13), que le repérage (7) s'étend suffisamment loin dans la direction transversale à la ligne de captage d'image (13), ou qu'un repérage supplémentaire est prévu à une certaine distance du repérage dans la direction transversale à la ligne de captage d'image, de sorte qu'il soit détecté optiquement par la ligne de captage d'image (21) supplémentaire, et qu'un mouvement de rotation de la charge (6) autour de l'axe d'oscillation est détecté à partir de la différence des données de position fournies par les deux dispositifs d'exploitation.

5. Dispositif selon l'une quelconque des revendications précédentes, caractérisé par le fait que le dispositif d'éclairage (8) et la caméra (9) à réseau linéaire sont disposés directement l'un à côté de l'autre, et que la surface réfléchissante (10) du repérage (7) est constituée d'éléments réfléchissants en forme de trièdres.

6. Dispositif selon l'une quelconque des revendications précédentes, caractérisé par le fait que le dispositif d'éclairage (8) et la caméra (9) à réseau linéaire sont disposés à proximité immédiate de la suspension pendulaire, et qu'en position de repos de la charge (6) le repérage (7) est disposé verticalement à l'aplomb en dessous.

7. Dispositif selon l'une quelconque des revendications précédentes, caractérisé par le fait qu'il est prévu un dispositif (18) de mesure destiné à déterminer la longueur (l) d'oscillation, et que le signal de mesure du dispositif (18) de mesure est exploité dans le dispositif (16) d'exploitation avec le signal (S) de la ligne de captage d'image (13), afin de déterminer l'angle (α) d'oscillation et/ou la position instantanée de la charge.

8. Dispositif selon l'une quelconque des revendications précédentes, caractérisé par le fait que, dans la direction de l'oscillation, la surface réfléchissante (10) est contiguë à une surface non réfléchissante, de préférence une surface noire mate (11), et que pour déterminer la position du repérage (7) le dispositif (16) d'exploitation explore le signal de la ligne de captage d'image (13) ayant le contraste le plus grand après l'apparition de la variation de luminosité.

9. Dispositif selon la revendication 8, caractérisé par le fait que la surface réfléchissante (10) a une étendue donnée à l'avance dans la direction (x) d'oscillation, et qu'après l'apparition des deux variations de luminosité le dispositif (16) d'exploitation explore le signal (S, S') de la ligne de captage d'image (13) ayant respectivement le contraste le plus grand, et détermine la position du milieu du repérage (7) à partir du milieu entre les deux variations de luminosité.

10. Dispositif selon l'une quelconque des revendications précédentes, caractérisé par le fait qu'au moins un appareil (22, 23) de mesure de profil de distance à laser est disposé sur la grue et, à l'intérieur d'une zone angulaire (27, 28) d'exploration ouverte le long de la direction (x) d'oscillation, génère un rayon laser qui est dirigé sur un bord extérieur (24, 25) de la charge (5, 6) s'étendant transversalement à la direction (x) d'oscillation et qui détermine d'autres données de position de la charge (5, 6) à partir de la lumière laser réfléchie, et que la caméra (9) à réseau linéaire et l'appareil (22, 23) de mesure de profil de distance à laser comportent un dispositif (40) de combinaison pour la combinaison des données de position fournies par la caméra (9) à réseau linéaire et des autres données de position fournie par l'appareil (22, 23) de mesure de profil de distance à laser.

11. Dispositif selon la revendication 10, caractérisé par le fait que le dispositif (40) de combinaison comporte un dispositif de commutation, qui permet une commutation entre les données de position de l'appareil (22, 23) de mesure de profil de distance à laser et celles de la caméra (9) à réseau linéaire.

12. Dispositif selon la revendication 10 ou 11, caractérisé par le fait qu'une surveillance mutuelle de plausibilité et/ou une correction des données de position de l'appareil (22, 23) de mesure de profil de distance à laser et de la caméra (9) à réseau linéaire est effectuée dans le dispositif (40) de combinaison.

13. Dispositif selon la revendication 10 ou 12, caractérisé par le fait que dans le dispositif (40) de combinaison, les données de position provenant de la caméra (9) à réseau linéaire sont insérées en tant que valeurs intermédiaires entre les autres données de position provenant de l'appareil (22, 23) de mesure de profil de distance à laser.

14. Dispositif selon l'une quelconque des revendications précédentes, caractérisé par le fait qu'il est disposé dans la zone de la charge (6) des détecteurs à ultrasons (30), qui sont destinés à la surveillance directe de collision dans la direction (x) d'oscillation.

FIG 1

FIG 2

11

FIG 3

FIG 4

FIG 5

FIG 6

FIG 8

FIG 7

FIG 9